# EUROPEAN PATENT APPLICATION

(11) **EP 1 574 749 A1**
(43) Date of publication of application: **14.09.2005**
(21) Application number: 04005731.7
(22) Date of filing: 10.03.2004
(51) Int. Cl.: F16H 1/32

(54) **Gear with sinusoidal tooth profile**

(71) Applicant: Concens A/S, 6715 Esbjerg N (DK)
(72) Inventor: Kugle, Jens, 8240 Risskov (DK)
(74) Representative: Nielsen, Leif

(57) **Abstract**

A gear system, especially hypocycloidal gear systems, with a first 105 and a second intermeshing gear wheel 110, where the tooth profiles of the first and the second gear wheels are closed sinusoids.

## Description

### FIELD OF THE INVENTION

The present invention relates to tooth profiles in gears, especially orbital and hypocycloidal gears. The invention also relates to actuators with hypocycloidal gears.

### BACKGROUND OF THE INVENTION

The profile of teeth in gears has been subject to intensive study for many years, and a large variety of suggestions have been given in different applications. Especially for compact gears, such as planetary, orbital, epicyclical, or hypocycloidal gears, tooth profiles depend of the actual advantages that are desired in connection with the application.

A discussion on tooth profiles in internal planetary gears, also called orbital or hypocycloidal gears, can be found in US patent application no. 5 707 310 by Maeguchi assigned to Sumitomo. From a figure of this document, an example of prior art has been taken and copied into FIG. 1 for the purpose of illustration. In line with the explanation of US 5 707 310, the hypocycloidal gear of FIG. 1 has an input shaft 1 with an eccentric body 3a in contact with an external gear 5a by means of rollers 4a. Rotation of the input shaft 1 causes a rocking of the inner external gear 5a along a circle around the input shaft 1. Due to the meshing between the teeth of the inner external gear 5a and the teeth of the outer internal gear 10, this rocking results in a relative rotational motion of between the inner external gear 5a and the outer internal gear 10. Internal gear in this respect means gear with inner teeth and external gear means gear with outer teeth.

This relative motion may be utilised to rotate the outer internal gear 10, such that an output shaft can be coupled to this outer gear. In this case, the output shaft would rotate in the same direction as the rotating input 1 shaft but much slower. If the differences of teeth is one, one rotation of the input shaft results in a 1/n rotation, where n is the number of teeth of the inner external gear 10.

Alternatively, the outer internal gear 10 can be fixed and the relative rotational motion can be transferred to an output shaft connected to the inner external gear by means of pins 7 with rollers 8 loosely inserted into inner roller holes 6a of the inner external gear 5a. In this case, the output shaft would rotate in an opposite way relative to the input shaft 1.

As explained in US patent 5 707 310, the external gear has a prolate epitochroid tooth profile. According to US 5 707 310, an improvement concerning dynamic errors in the radial direction can be achieved by using a curtate epitochroid tooth profile. For example, one of the gears may have a curtate epitochroid tooth profile whereas the meshing other gear has a convex circular tooth profile.

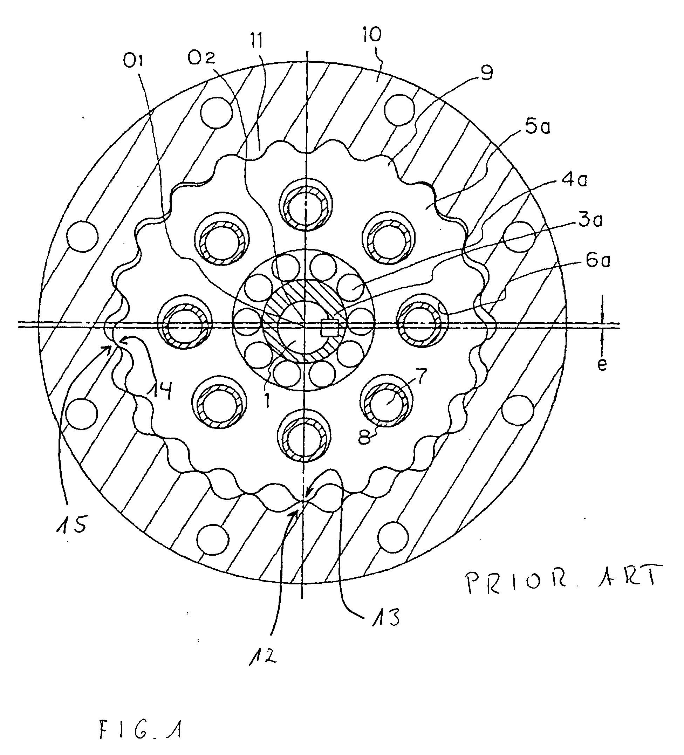

The prior art gear as disclosed in US 5 707 310 and illustrated in Fig. 1 has a severe draw back which has not been explained in prior art. In the illustration of Fig. 1, the inner external gear 5a has a diameter which is smaller than the diameter of the outer internal gear 10 by an amount just sufficient to cause the lower teeth 13 of the inner gear to go clear of the lower teeth 12 of the outer gear 10. In practice however, such a small difference in diameter implies the risk that other teeth 14 of the inner external gear 5a collide with other teeth 15 of the outer internal gear 10. In practice, the shown embodiment with the shown tooth profile cannot work, unless the height of the teeth is reduced or the diameter of the inner external gear 5a is made smaller than shown in Fig. 1.

If, on the one hand, the height of the teeth is reduced to avoid collision between other teeth 14, 15, the gear system implies the risk for a sliding motion between the teeth or implies the risk for a not smooth but staggered motion resulting in vibration and noise at high speed. This is also the reason, why in many gearings, the inner gear wheel constantly is in contact with at least two teeth of the outer gear, as this reduces sliding and staggering motions.

A reduction of the diameter of the inner external gear 5a, on the other hand, results in a reduction of the number of teeth of the inner gear 5a. A reduction of the number of teeth of the inner gear 5a leads to a larger difference of teeth between the inner and the outer gear, for example a difference of two teeth instead of one, resulting in a lower gearing ratio.

Thus, during construction of gears, the constructor is faced with the problem, on the one hand, to achieve a high gear ratio, and, on the other hand, to construct tooth profiles that allow a smooth, noiseless driving of the gears despite large forces. Therefore, sophisticated tooth profiles have been developed, such as disclosed in US patent no. US 6 342 023 by Willmot assigned to Almbridge, where part of the teeth follow a sinusoidal curve and another part of the teeth is truncated or in US patent no. 5 695 425 by Hashimoto assigned to Teijin Seiki, where the tooth profile is epitochroidal.

The design is in many cases governed by the purpose to construct teeth that can transmit and withstand large forces. Another important factor is the minimising of friction and noise, which is important especially in high speed gears. Therefore gears have been provided with rollers between an inner external gear and an outer internal gear, such as disclosed in British patent application GB2220461 by Ignatischev et al. using sinusoidal tooth profiles or in the above mentioned 5 695 425 by Hashimoto using epitocroidal tooth profiles.

For gears, for example of the hypocycloidal type, it is desirable to provide a gear
- that is easy to manufacture and at low cost,
- that runs smoothly and noiseless without high friction,
- that has a potential for high gearing ratios,
- that has a potential for running smoothly at high speed, and
- that has a potential for small constructions.
   As shown above, these aspects are contradictory,
- because sophisticated tooth profiles are difficult and expensive to produce,
- because applied prior art tooth profiles in small constructions require small tolerances making the construction difficult and expensive to produce,
- because simple prior art tooth profiles usually involve high friction, low speed and low gearing ratios, and
- because incorporation of rollers is difficult in small constructions.
   There is therefore a need for gearings, especially hypocycloidal gearings, with a tooth profile having the potential for easy manufacture at low cost, smooth running, application with high gearing ratios, application at high speed, and application in small constructions.

### DESCRIPTION / SUMMARY OF THE INVENTION

It is therefore the purpose of the invention to provide a gearing with a tooth profile having such properties, especially a hypocycloidal gear with a tooth profile fulfilling such demands.

This purpose is achieved with a gear system with a first gear wheel with a tooth profile and a second gear wheel with a tooth profile, the tooth profile of the first gear wheel corresponding to the gear profile in the second gear wheel for mutual force transmitting engagement by direct meshing of the tooth profiles, characterised in that the tooth profiles of the first and the second gear wheels are harmonic deviations from a closed circular path, for example a closed sinusoid, ensuring single point contact between the first and the second gear. The harmonic variations have a period, the physical length of which along the peripheries of the first gear wheel and the second gear wheel are identical.

The term harmonic deviations from a closed circular path means sinusoidal tooth profiles and profiles that approximately follow a sinusoid. Thus; the term harmonic deviation also covers slightly distorted sinusoids, where the distortion may be due to manufacturing tolerances, slight variations due to desired tolerances in the gear or tolerances that are desired due to other reasons, for example the necessity of space between the gear wheels due to application of an oil film.

A gear with a point like contact, for example with a sinusoidal tooth profile, between the gears is advantageous. This can be best understood from a theoretical hypocycloidal analogy with a smaller circle running in a larger circle. The smaller circle will at all times have only one point of contact with the larger circle, where the point of contact moves along the peripheries of the gear wheels. Deforming the inner and the outer circle by a harmonic variation of suitable height along the circumference does not breach this relation. There will still only be a moving point contact between the two gears.

A gear with a closed sinusoidal is easy to manufacture, because the curve as such is easy to construct in a practical way. In order to manufacture such a gear, a circular disk may be rotated at constant speed with an abrading tool being pushed towards the periphery of the rotating disc and retracted from it in a harmonic way, where the speed of the disc matches the harmonic variation in order to create the integer number of periods along the periphery of the gear. Alternatively, gears of this type may be extruded.

Having a moving point contact between the two gears reduces wear, because no frictional sliding appears between the two surfaces. The movement is in principle as smooth as a ball running along the inside of a circular barrel. It reduces noise, because the contact is not intermitted. In contrast, especially the problems with friction and noise have been addressed in the disclosure of the above mentioned US patent no. 5 707 310 with respect to the embodiment as shown in FIG. 1 where the tooth profile is a prolate epitochroid.

In comparison with the gear of FIG. 1, where the height of the teeth in practice would have to be reduced in order to avoid collision between teeth the height of the teeth in gears according to the invention can be relatively much higher. This is so, because the shape of a sinusoidal curve for the teeth is the optimal curve with respect to prevention of tooth collision if the requirement is as high as possible teeth. The latter requirement is relevant in order to also have broad teeth which decrease the risk for breakage of teeth at large forces.

The first gear may be an external gear, for example in a gear hypocycloidal gear system with an inner, external first gear and an outer internal second gear. A high gearing ratio may be achieved, if the difference between the number of teeth of the second gear and the first gear is one. This problem is addressed in US patent no. 6 520 883 by Rennerfelt. As a solution, an eccentric gear is disclosed, with which a gear ratio of 99 can be achieved. High gear ratios in compact gears in order to reduce the rotation from a rotating input axle to a rotating output axle by a large factor are especially desirable in connection with actuators.

In a practical embodiment, an input shaft is mounted rotatable and eccentric in the first gear for causing a circular rocking of the first gear with respect to the input shaft during rotation of the input shaft. Advantageously, the gear system comprises a counter weight for balancing the inner gear during the circular rocking.

The above hypocycloidal gear system is very much suitable for rotating actuators as well as linear actuators. In actuators, the gear system should have a high gearing ratio in order to be able to transmit large forces even though the driving mechanism with motor is relatively small with relatively small forces. Furthermore, the gearing system should be self blocking in order to prevent return motion in cases of overload. It is furthermore desired to run smooth in order to prevent noise from the gearing.

A special application of the harmonic, for example sinusoidal, tooth profile is in compact hypocycloidal gear systems with a double satellite gear wheel between two meshing gears. Certain hypocycloidal compact gears of this kind are known in certain specialised fields, for example in connection with automobile seats as disclosed in US patent no. 5 536 217 by Doulon and Baloche, US patent no. 5 209 637 by Reubeuze and US patent application no. 2004/0014545 by Branov et al. These compact gears comprise a fixed flange with an inner toothing for cooperation with a double eccentric satellite the toothing of which mesh on one side with the fixed flange toothing and on the other side with the inner toothing of a mobile flange. However, despite the disclosures of such hypocycloidal gears, it has not been disclosed that this type of gear can be used with very high gearing ratios. For example, the gearing ratios for the gears disclosed in these patents can be calculated to be in the order of 50.

However, using harmonic tooth profiles, gear with very high gear ratios can be constructed, which is another object of the invention and explained in more detail in the following.. For example, this can be achieved with a hypocycloidal gear system comprising a first, a second and a third gear wheel, the first gear wheel being an eccentric double satellite gear wheel with a first set of teeth meshing with teeth of the second gear and with a second set of teeth meshing with the teeth of the third gear.

The harmonic deviations, for example sinusoids, have a period, the physical length of which along the peripheries of the first set of teeth and the second gear wheel are identical, and optionally also identical along the peripheries of the second set of teeth and the third gear wheel.

If the number of teeth of the first set of teeth is D, the number of teeth of the second set of teeth is B, the number of teeth of the second gear is C, and the number of teeth of the third gear is A, the gear ratio R has been found to be equal tol/{1-[(C*B)/(D*A)]} for this kind of gear and can be large as compared to the disclosures mentioned above, for example larger than 100.

A hypocycloidal gear system according to the invention may easily have gear ratios of 1000 or several thousand. For example, for a gear according to the invention with (A, B, C, D)=(101, 100, 100, 99) a gearing ratio of 10,000 can be achieved, and with (A, B, C, D)=(60, 59, 59, 58), a gear ratio R=-3480 is found.

As thorough study of the problem has shown that the term R=1/{1-(C*B)/(D*A)} represents the gearing ratio of such a device, where the constraints are put upon it that A>B and C>D simultaneously, meaning that the satellite gear fits within second and third gears, or that A<B and C<D simultaneously, in which case the double satellite has inner teeth that fit around outer teeth of the second and third gears. Thus, in order to achieve the highest gear ratios, either the teeth of the satellite gear are outer teeth and the teeth of both the second and the third gear are inner teeth or the teeth of the satellite gear are inner teeth and both the teeth of the second an the third gear are outer teeth.

It should be recognised here that it is possible to construct gears, where simultaneously A>B and C<D or where simultaneously A<B and C>D. However, in these cases the gear ratio is low, typically far below 100. It should also be noted that the case where A=C and B=D are fulfilled at the same time implies the trivial case where the third gear is not rotating relative to the second gear wheel.

According to the formula for the gear ration, a simple method for constructing compact gears with high gear ratios has been found. Thus, constructing a compact gear system with a high gear ratio R, the method may comprise
- pre-deciding a minimum decided gear ratio R,
- determining parameters A, B, C, and D with the constraints (C>D and A>B) or (C<D and A<B) such that 1/{1-[(C*B)/(D*A)]} = R,
- providing a first gear wheel as a eccentric double satellite gear wheel with a first set of outer teeth and a second set of outer teeth, where the number of teeth of the first set of teeth is D and the number of teeth of the second set is B,
- providing a second hypocycloidal gear wheel with a number C of inner teeth configured to mesh with the first set of outer teeth,
- providing a third hypocycloidal gear wheel with a number A of inner teeth configured to mesh with the second set of outer teeth.

A high gear ratio in this context means a large reduction of rotation speed between rotational input means and rotational output means. As compared to the above priori art mentioned gear ratios of less than 100, a gear constructed according to the method can yield gear ratios of 100 and more, even up to many thousands. This will be explained below in greater detail.

How such high gear ratios can be achieved can be understood from the following illustrating example. A rotation of an input axle that causes en eccentric rocking of the satellite, results in a rotation of the satellite in a first direction with respect to the second gear wheel. As the number of teeth of the second and the third gear differ, the rotation of the satellite will cause a rotation of the third gear wheel relative of the satellite in a second direction. Thus, the rotation of the input axle causes a slow rotation of the satellite in one direction and a slow rotation of the third gear wheel in the opposite direction resulting in a very small rotation of the third gear relative to the second gear. This very small resulting relative rotation is the reason for the high gear ratio.

Surprising for gear systems according to the invention is the fact that a gear where the difference of the number of teeth are more than one between the first gear end the satellite gear, still may lead to hypocycloidal gear systems with gear ratios of more than 1000. For example with a difference of two in the number of teeth between the inner and the outer gear, (A, B, C, D)=(102, 100, 101, 99) a gear ratio of more than 5000 is possible. And a number of teeth difference of as much as 10, for example with (A, B, C, D)=(110, 100, 109, 99), yields a gear ratio of more than 1000.

In addition, using the formula above, it is readily recognised, that for high gear ratios, an interchange of the value of A with the value of C, and a corresponding interchange of B with D results in almost the same gear ratio. This corresponds to the fact of calculating the gear ratio from the opposite end of the gear and turning the input axle in an opposite way, results in a gear ratio which differs by the amount of one.

Higher gear ratios can be achieved by using larger number of teeth. However, for reasons of illustration, values around 100 for number of teeth have been chosen for reason of comparison with US patent no. 6 520 883 by Rennerfeld, where 100 teeth and 99 teeth of the intermeshing gears have been disclosed.

### SHORT DESCRIPTION OF THE DRAWINGS

The invention will be explained in more detail with reference to the drawing, where
FIG. 1 is a prior art hypocycloidal gear with an epitochroidal tooth profile,
FIG. 2 illustrates a gear system according to the invention,
FIG. 3 illustrates a gear wheel with closed circular sinusoid.
FIG. 4 shows a hypocycloidal gear with a tooth profile according to the invention
FIG. 5 shows an actuator with a hypocycloidal gear,
FIG. 6 is a sketch for hypocycloidal gears with four different embodiments,
FIG. 7 is an exploded view for an actuator according to the invention,
FIG. 8 is an illustration of the actuator of FIG. 7.

### DETAILED DESCRIPTION / PREFERRED EMBODIMENT

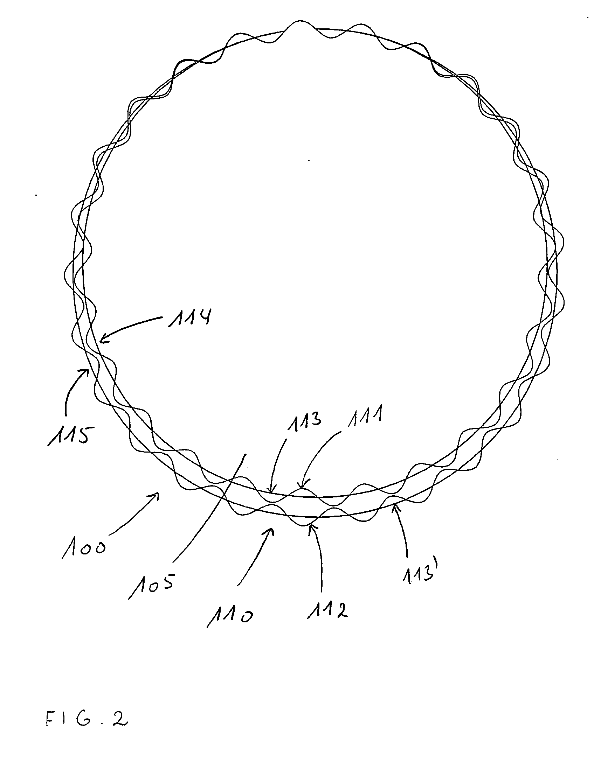

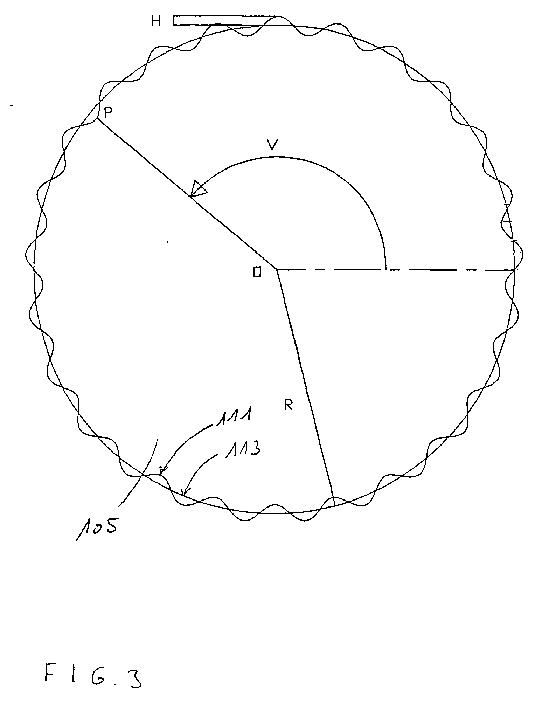

FIG. 2 illustrates a hypocycloidal gear system 100 according to the invention. The gear system is comparable to the prior art gear illustrated in FIG. 1 with a difference of the tooth profile. The tooth profile 111 of the inner external gear wheel 105 and the tooth profile 112 of the outer internal gear wheel 110 are closed circular sinusoidal curves as harmonic variations around a circle 113 with a radius R. This is illustrated in greater detail in FIG. 3. The physical length of the sinusoidal period along the peripheries of the inner gear 105 and the outer gear 110 are identical.

A rocking of the inner gear 105 along a circle around the centre of a stationary outer gear 110 causes the inner gear 105 to rotate in the opposite way as the outer gear 110 with a rocking motion in analogy with the gear of FIG. 1. Thus, with an input shaft constructed in analogy to the gear FIG. 1, an output shaft may be coupled to the rotating inner gear 105. Alternatively, the inner gear 105 could remain fixed and the output shaft could be coupled to the rotating outer gear 110, which would rotate in the same direction as the input shaft, just much slower than the input shaft.

Such a gear, where both the inner 105 and outer 110 gear have corresponding sinusoidal tooth profiles, has advantages that have not been fully recognised in prior art. These advantages will be explained in more detail in the following.

In the following, the theoretical construction will be investigated in more detail with reference to FIG. 3. A closed circular sinusoidal curve 111 is achieved by a harmonic variation of the radius of a circle 113. The formula for the curve 111 can be parametrically expressed simply as OP=R+H*sin(V*N), where OP is the distance from the Origin O to a point P on the curve, R is the Radius of the circle 113 on which the harmonic sinusoidal variation is imposed, V is the angle from an arbitrary but fixed point on the circular curve, N is the number of periods of the sinusoid around the circle 113, and H is the amplitude of the harmonic variation.

A corresponding outer gear 110 has the same physical length of the sinusoidal period along its tooth profile 112, where the harmonic variation is with respect to an outer circle 113'. This puts constraints on the diameter of the outer gear relative to the inner gear for a desired number of periods, for example one more on the outer gear 110 than on the inner gear 105. For the construction, the height H is adjusted such that the width of the inner gear 105 is at least two times H less than the width of the outer gear 110.

A first advantage is the fact that a closed sinusoidal is easy to manufacture, because the curve 111, 112 as such is easy to construct in a practical way. In order to manufacture such a gear, a circular disk may be rotated at constant speed with an abrading tool being pushed towards the periphery of the rotating disc and retracted from it in a harmonic way, where the speed of the disc matches the harmonic variation in order to create the integer number of periods along the periphery of the gear.

An even simpler manufacture is achieved by extrusion of rods with the correct tooth profile, where the rod afterwards is cut into gear wheels. As the tooth profile is smooth and harmonic, the tooth profile can be manufactured this way with high precision and low tolerance.

A further advantage is the fact that in a gear with a sinusoidal tooth profile results in a point like contact between the two gears. This can be best understood from a theoretical hypocycloidal analogy with a smaller circle running in a larger circle. The smaller circle will at all times have only one point of contact with the larger circle, where the point of contact moves along the peripheries of the gear wheels. Deforming the inner and the outer circle by a harmonic variation of suitable height along the circumference does not breach this relation. There will still only be a moving point contact between the two gears.

Having a moving point contact between the two gears reduces wear, because no frictional sliding appears between the two surfaces. The movement is in principle as smooth as a ball running along the inside of a circular barrel. It reduces noise, because the contact is not intermitted. In contrast, especially the problems with friction and noise have been addressed in the disclosure of the above mentioned US patent no. 5 707 310 with respect to the embodiment as shown in FIG. 1 where the tooth profile is a prolate epitochroid.

In comparison with the gear of FIG. 1, where the height of the teeth in practice would have to be reduced in order to avoid collision between teeth 14, 15, the height of the teeth in gears according to the invention, see FIG. 2, can be relatively much higher. This is so, because the shape of a sinusoidal curve for the teeth is the optimal curve with respect to prevention of tooth collision if the requirement is as high as possible teeth. The latter requirement is relevant in order to also have broad teeth which decrease the risk for breakage of teeth at large forces.

In hypocycloidal gears according to the invention, a high gear ratio is possible, because the number of teeth between the outer gear 110 and the inner gear 105 may differ only by one, even though the gear is subject to large forces during operation.

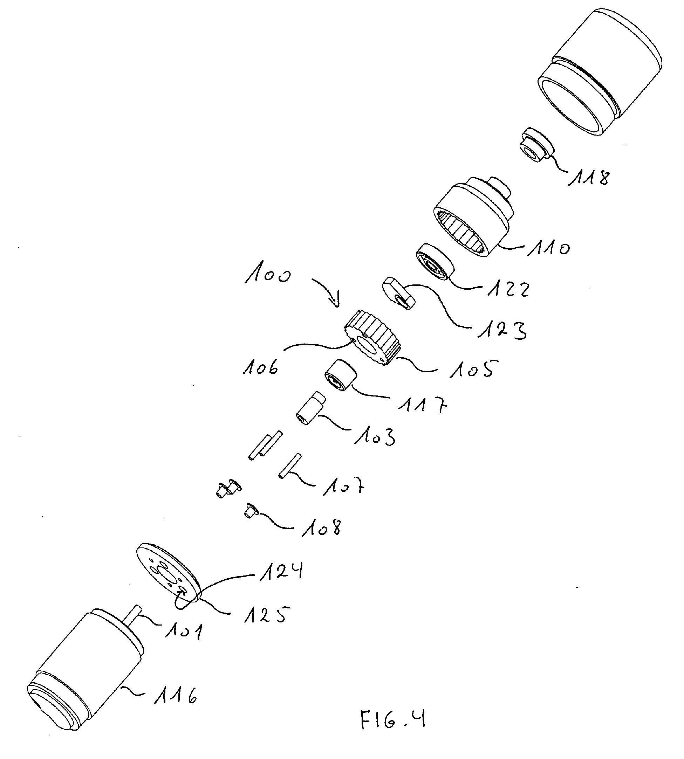

A hypocycloidal gear 100 according to the invention is shown in an exploded view in FIG. 4. The gear 100 comprises an outer internal gear 110 and an inner external gear 105 for mutual force transmitting engagement by direct meshing of the teeth 111, 112 between the gears 105, 110. A driving motor 116 with an input shaft is connected with an eccentric body 103 in contact with the external gear 105 by means of rollers 104 in a roller bearing 117. The roller bearing 117 supports the inner gear 105.

Rotation of the input shaft 1 through the eccentric body causes a rocking of the inner external gear 105 along a circle around the input shaft 101. Due to the meshing between the teeth 111 of the inner external gear 105 and the teeth 112 of the outer internal gear 110, this rocking results in a relative rotational motion between the inner external gear 105 and the outer internal gear 110.

This relative motion may be utilised to rotate the outer internal gear 110, such that an output shaft can be coupled to this outer gear 110 by means of connector 118. In order to centre the output shaft, for example to assure smooth rotation of a spindle connected to the output shaft, the output shaft may be further supported in a roller bearing or ball bearing unit 122.

In order to achieve a balanced running of the gear system the eccentric body 103 comprises a counter weight 123 which balances the eccentric rocking of the inner gear 110. For example, the offset of the eccentric body from the input shaft may be 0.5 mm.

The stationary inner gear 105 is supported by pins 107 extending from holes 106 in the inner gear 105 into bearings 108 placed in corresponding holes 124 of a plate 125. This plate 125 is fixed to the housing of the motor 116. The bearings 108 are free to rotate smoothly in order to allow a free rocking of the inner gear 105 connected to the bearings 108 by means of pins 107.

A further advantage of such type of gear system 100 is the self-blocking property. Thus, a rotational force applied on the output shaft will not be transmitted to the input shaft 101. In this case, where the inner gear 105 is connected to the stationary housing 116 with stationary pins 107 and the outer gear 110 is connected to an output shaft, the pins 107 prevent the inner gear from rotation, as the pins 107 in combination with the bearings 108 only allow a rocking motion of the inner gear 105. Therefore, no rotating force of the outer gear 110 is transmitted as a rotating force to the input shaft 101.

In an alternative case, not shown here but readily accomplished, where the outer gear 110 is stationary and the pins 107 are connected to an output shaft, a rotational force on the inner gear will not be transmitted, as the internal gear 105 is prevented from rotation by the meshing with the stationary outer gear 110.

In the foregoing, only two cases have been explained for hypocycloidal gears, namely one case, where the inner gear is stationary, and another case, where outer gear is stationary. However, gears according to the invention may also be employed in gear systems, where both the outer gear and the inner gear are rotating.

In practical embodiments, it may be desirable to use oil between the teeth 113 of the inner gear wheel 105 and the teeth 112 of the outer gear wheel. In this case, the tolerance has to be chosen such that there is space between the gear wheels 105, 110 to achieve an oil film of sufficient thickness. Therefore, the shape of the gear wheels 105 and 110 may deviate from the true circular sinusoidal. However, the deviation will not be so large that the moving point contact between the gears vanishes.

Though the invention has been explained with relation to a hypocycloid gear system, sinusoidal teeth are also useful for other types of gear, for example epicycloids, where one external gear rolls on the outer periphery of another external gear.

The gear wheels above have been described as being circular, however, departure thereof are possible. For example, one of the gear wheels may have an oval cross section. Also in this case, a meshing between gear wheels is possible with a closed sinusoid around the oval gear wheel. For example, a circular wheel with external teeth may run around an oval wheel with external teeth, or a circular wheel may run inside a gear wheel with internal teeth. In addition, other combinations or forms are possible.

The above hypocycloidal gear system is very much suitable for rotating actuators as well as linear actuators. In actuators, the gear system should have a high gearing ratio in order to be able to transmit large forces even though the driving mechanism with motor is relatively small with relatively small forces. Furthermore, the gearing system should be self blocking in order to prevent return motion in cases of overload. It is furthermore desired to run smooth in order to prevent noise from the gearing.

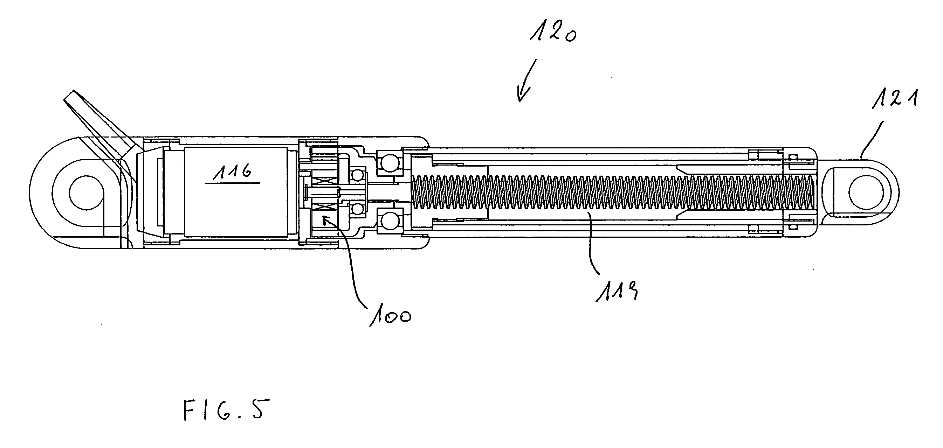

A linear actuator 120 with a gear system according to the invention is shown in FIG. 5. The motor 116 drives a spindle 119 for actuating end part 121. Interposed between the motor 116 and the spindle 119 is a gear system 100 of the type as shown in FIG. 4.

Actuators in a variety of applications, for example wheelchairs or household applications, are desired to be small, to be able to transmit large forces and to be able to function with low noise. A hypocycloidal gear system according to the invention fulfils such demands. A linear actuator with such a gearing system has an input shaft connected to a driving system including a motor. The output shaft is connected to a threaded spindle, the rotation of which causes a nut on the thread of the spindle to be translated along the spindle in order to vary the length of the linear actuator.

However, using harmonic tooth profiles, gear with very high gear ratios can be constructed, which is another object of the invention and explained in more detail in the following.. For example, this can be achieved with a hypocycloidal gear system comprising a first, a second and a third gear wheel, the first gear wheel being an eccentric double satellite gear wheel with a first set of teeth meshing with teeth of the second gear and with a second set of teeth meshing with the teeth of the third gear. If the number of teeth of the first set of teeth is D, the number of teeth of the second set of teeth is B, the number of teeth of the second gear is C, and the number of teeth of the third gear is A, the gear ratio R has been found to be equal tol/{1-[(C*B)/(D*A)]} for this kind of gear.

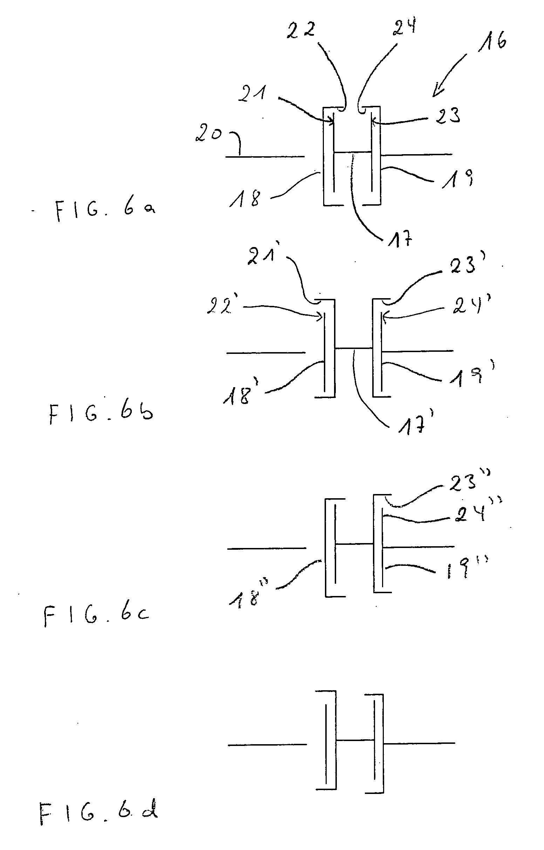

FIG. 6 is a sketch for hypocycloidal gear principles with four embodiments. In FIG. 6a, the hypocycloidal gear 16 comprising a first 17, a second 18 and a third 19 gear wheel. The first gear wheel 17 is an eccentric double satellite gear wheel that is driven by a rotational input axle 20 and that has a first set 21 of outer teeth meshing with inner teeth 22 of the second gear 18 and with a second set 23 of outer teeth meshing with the inner teeth 24 of the third gear 19.

The input axle 20 is coupled to the satellite gear wheel 17 by a rotational eccentric bearing. A rotation of the input axle 20 causes the eccentric bearing to rotate inside the satellite gear wheel 17 resulting in a rocking motion of the satellite gear wheel 17. The rocking motion causes the first set 21 of outer teeth to rockingly mesh with the inner teeth 22 of the surrounding second gear wheel 18 resulting in a first rotation of the satellite gear wheel 17 relatively to the second gear wheel 18. It also causes the third gear wheel 19 to rotate with a second rotation relatively to the satellite gear wheel 17 because of the meshing between the rocking second set of teeth 23 of the satellite gear wheel 17 and the inner teeth 24 of the third gear 19.

The first rotation and the second rotation are opposite, which is an important fact. Because a proper choice of number of teeth makes these two rotations to almost cancel each other, resulting in a very slow rotation of the third gear wheel 19 relatively to the second gear wheel 18. This is the reason for the high gear ratios that can be obtained in a gear according to the invention.

Possible gear ration are illustrated in the Table 1 below. Thus for a tooth difference of 1 between the outer and inner gear wheels, a gear ratio of almost 10,000 can be obtained for 100 teeth. The gearing ratio defined here is the factor of reduction of rotation of rotatable output means relative to rotatable input means. In dependence of the second 18 or the third 19 gear wheel having 100 teeth, the gear ratio shifts sign when A and C are interchanged simultaneously with an interchange of B and D. The physical explanation is that this corresponds to a change in the rotational direction of the input axle. This also results in a change of the gearing ratio by one.

**Table 1**

| | | | | | | | | |
|---|---|---|---|---|---|---|---|---|
| Third gear wheel | A | 99 | 100 | 100 | 100 | 100 | 100 | 100 |
| Second set of teeth | B | 98 | 99 | 98 | 97 | 96 | 90 | 51 |
| Second gearwheel | C | 100 | 99 | 99 | 99 | 99 | 99 | 99 |
| First set of teeth | D | 99 | 98 | 97 | 96 | 95 | 89 | 50 |
| Teeth difference | | 1 tooth | 1 tooth | 2 teeth | 3 teeth | 4 teeth | 10 teeth | 50 teeth |
| Gear ratio | | 9801 | -9800 | -4850 | -3200 | -2375 | -890 | -102 |

From the table, it is seen that surprising high gear ratios can be obtained even with a tooth difference of 10 between the meshing inner and outer gears. This implies that there need not be so hard constraints on the profile of the teeth. In other words, compact gears may be produced with gear ratios of far more than 100 without having to use special complicated tooth profiles, because the inner gear wheel can be made substantially smaller than the outer gear wheel.

The principle of the gear shown in FIG. 6b is similar to the principle in FIG. 6a. The main difference is that the satellite gear wheel 17' has sets 21', 23' of inner teeth, whereas the second 18' and the third 19' gears have outer teeth 22', 24'. Gear ratios of the same height as for the embodiment of FIG. 6a can be obtained as shown in the Table 2 below in comparison to Table 1.

**Table 2**

| | | |
|---|---|---|
| Third gear wheel | A | 98 |
| Second set of teeth | B | 99 |
| Second gear wheel | C | 99 |
| First set of teeth | D | 100 |
| Teeth difference | | 1 tooth |
| Gear ratio | | -9800 |

Concerning the functioning, the principles as shown in FIG. 6c and FIG. 6d, however, differ substantially from the principles as shown in FIG. 6a and FIG. 6b, because in this case, the first and the second rotation are in the same direction. This is confirmed by the values in Table 3, where one set of values corresponds to the principle of FIG. 6c and one set of values corresponds to the principle of FIG. 6d, which also corresponds to the inverted principle of FIG. 6c and therefore has a gear ratio differing by one.

**Table 3**

| | | | |
|---|---|---|---|
| Third gear wheel | A | 98 | 99 |
| Second set of teeth | B | 99 | 98 |
| Second gear wheel | C | 100 | 99 |
| First set of teeth | D | 99 | 100 |
| Teeth difference | | 1 tooth | 1 tooth |
| Gear ratio | | -49 | 50 |

Thus, the second gearing step constituted by the second set of teeth 23" meshing with the teeth 24" of the third gear wheel 19" reduces the gear ratio instead of increasing it relatively to the first gearing step constituted by the first set of teeth 21 " and the second gear wheel 18".

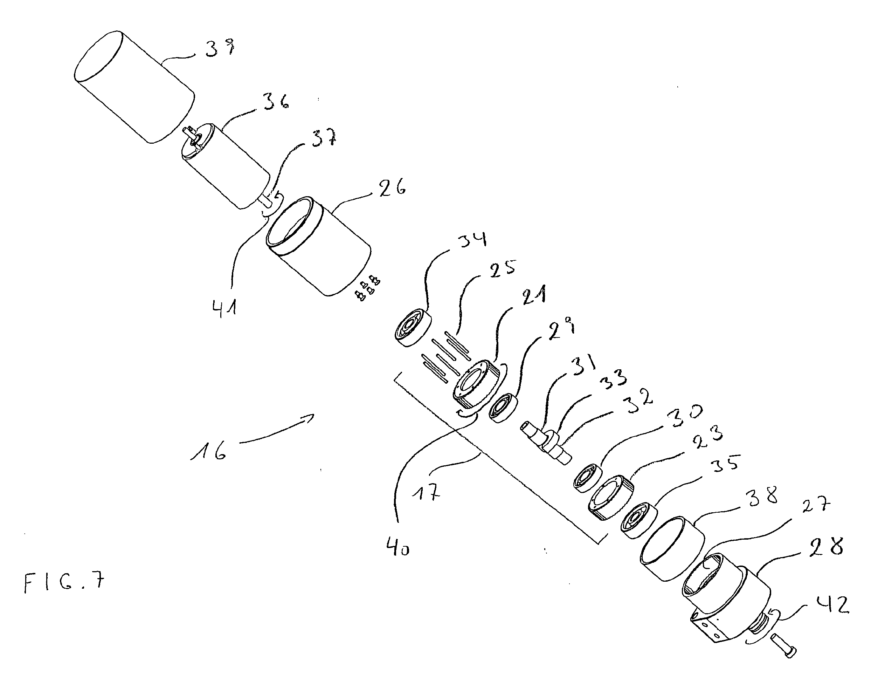

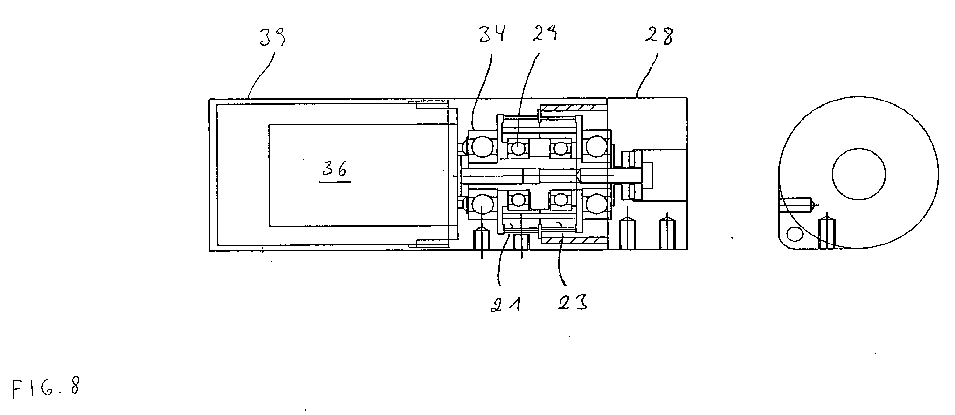

FIG. 7 and 8 illustrates a compact actuator 16 according to the invention. The actuator includes a hypocycloidal gear system that comprises a first gear wheel 17, constituted by a first set of teeth 21 and a second set of teeth 23 solidly interconnected by pins 25 to form a double satellite gear wheel. The gear system further comprises a second gear wheel, which is not shown but located inside the first part 26 of the housing, and a third gear wheel 17 inside a second part 28 of the housing.

The first 21 and second 23 set of teeth are mounted on a first set of roller bearings 29, 30 on eccentric parts 31, 32 of a rotational axle 33. The rotational axle 33 is supported in a second set of roller bearings 34, 35 and driven by motor 36 through a connection 37. An additional part 39 are used for the housing together with an additional self-lubricating bronze bearing.

The actuator functions in the following way. The motor 36 though connection 37 drives rotational axle 33. The eccentric parts 31, 32 of the rotational axle 33 causes the satellite gear wheel 17 constituted by two sets of outer teeth 21, 23 combined by the pins 25 to perform a rocking motion inside the second gear wheel (not shown but inside part 26) and the third gear wheel 27. The rocking motion causes the satellite wheel 17 to rotate relative to part 26 in a first rotational direction illustrated by an arrow 40 which is in an opposite direction of the rotation of the motor illustrated by arrow 41. The rocking of the second set of outer teeth 23 results in a rotation of the second part 28 of the housing including the third gear wheel 27 to rotate in a direction, illustrated by arrow 42 relative to the satellite gear 17. The total rotation of the second part 28 relative to the first part 26 of the housing is the difference of the two rotations 40, 42. As the rotations 40 and 42 are in opposite directions the net rotation of the second part 28 of the housing relatively to the first part 26 of the housing can be made very small resulting in a large gearing ratio.

Therefore, the system as described in FIG. 7 and FIG. 8 constitute a very compact rotational actuator. For example, the first part 26 of the housing may be fastened to a support by means of fixture, whereas the second part 28 may be fastened to the element that is desired to be moved relatively to the support.

Because of the high gear ratio, relatively small units for the assembly can be chosen. Even a relatively small motor 36 can drive a large force due to the high gear ratio. Another important point is that satellite actuators are self blocking such that external rotational force between the first 26 and the second part 28 of the housing will not cause a relative rotation between these two parts.

Possibilities for employment of such actuators are various, for example for beds in hospitals, where a large force is required to move parts of the bed but only limited space for an actuator.

It may be readily recognised, that the second part of the housing may be substituted by a third gear wheel in connection with an output axle that drives the spindle of a linear actuator.

In general, the hypocycloidal gear 16 according to the invention is not limited to actuators but may be employed otherwise, where a high gear ration is desired. Advantageously in this connection is the fact that in addition to the high gear ratio, the system according to the invention can be constructed extremely compact and still deliver high forces.

## Claims

1. A gear system with a first gear wheel with a tooth profile and a second gear wheel with a tooth profile, the tooth profile of the first gear wheel corresponding to the gear profile in the second gear wheel for mutual force transmitting engagement by direct meshing of the tooth profiles, **characterised in that** the tooth profiles of the first and the second gear wheels are harmonic deviations from a closed circular path ensuring single point contact between the first and the second gear.

2. A gear system according to claim 1, where the tooth profiles are closed sinusoids with a period, the physical length of which along the peripheries of the first gear wheel and the second gear wheel are identical.

3. A gear system according to claim 1 or 2, wherein the first gear is an external gear.

4. A gear system according to claim 3, wherein the gear system is a hypocycloidal gear with an inner, external first gear and an outer internal second gear.

5. A gear system according to claim 4, wherein the difference between the number of teeth of the second gear and the first gear is one.

6. A gear system according to claim 4 or 5, wherein an input shaft is mounted rotatable and eccentric in the first gear for causing a circular rocking of the first gear with respect to the input shaft during rotation of the input shaft.

7. A gear system according to claim 1 or 2, wherein the gear system also comprises a third gear wheel, the first gear wheel being an eccentric double satellite gear wheel with a first set of teeth meshing with teeth of the second gear and with a second set of teeth meshing with the teeth of the third gear.

8. A gear system according to claim 7, wherein either the teeth of the satellite gear are outer teeth and the teeth of the second and the third gear are inner teeth or wherein the teeth of the satellite gear are inner teeth and the teeth of the second an the third gear are outer teeth.

9. A gear system according to claim 8, wherein the number of teeth of the first set of teeth is D, the number of teeth of the second set of teeth is B, the number of teeth of the second gear is C, and the number of teeth of the third gear is A, and the gear ratio R equal tol/{1-[(C*B)/(D*A)]} is larger than 100.

10. A gear system according to any single of the preceding claims in combination with an actuator.
